Europäisches Patentamt

European Patent Office

Office européen des brevets

(19)

(11) Veröffentlichungsnummer: **0 263 935**
**B1**

# EUROPÄISCHE PATENTSCHRIFT

(12)

(45) Veröffentlichungstag der Patentschrift:
02.05.90

(21) Anmeldenummer: 87111359.3

(22) Anmeldetag: 06.08.87

(51) Int. Cl.⁴: **B01J 19/18**
// C07C209/68

(54) **Verfahren zur Kühlung beim Ablauf exothermer Reaktionen und Reaktor, insbesondere Rührreaktor, zur Durchführung exothermer Reaktionen.**

(30) Priorität: 16.10.86 DE 3635217

(43) Veröffentlichungstag der Anmeldung:
20.04.88 Patentblatt 88/16

(45) Bekanntmachung des Hinweises auf die Patenterteilung:
02.05.90 Patentblatt 90/18

(84) Benannte Vertragsstaaten:
BE DE ES FR

(56) Entgegenhaltungen:
DE-C- 952 435
FR-E- 72 973
US-A- 3 085 626
US-A- 3 243 268

(73) Patentinhaber: BAYER AG,
D-5090 Leverkusen 1 Bayerwerk(DE)

(72) Erfinder: Dallmeyer, Hermann, Dr., Im Alten Driesch 22,
D-5068 Odenthal-Osenau(DE)
Erfinder: Stein, Harald, Dipl.-Ing., Niedersorpe 12,
D-5948 Schmallenberg 2(DE)

ACTORUM AG

## Beschreibung

Die Erfindung betrifft ein Verfahren zur Kühlung beim Ablauf exothermer Reaktionen, insbesondere in einem Rührreaktor, wobei Kühlflüssigkeit senkrechten, unten geschlossenen Siederohren laufend von oben zugeführt und der entstehende Dampf im Gegenstrom zur Kühlflüssigkeit nach oben abgeführt wird, sowie einen Reaktor, insbesondere Rührreaktor, zur Durchführung exothermer Reaktionen.

Bei einem bekannten Reaktor (DE-C 952 435) dieser Art ist das Siederohr als sogenanntes "Field-Rohr" ausgeführt, d.h., es besitzt eine doppelte Wandung, wobei in dem inneren, beidseitig offenen Rohr die Kühlflüssigkeit nach unten geführt wird und zwischen beiden Rohren der entstehende Dampf abzieht, welcher in einem durch einen Zwischenboden vom Reaktionsraum getrennten Kondensationsraum niedergeschlagen wird.

Dieser Reaktor und das dabei verwendete Kühlverfahren sind nur für die Abführung kleiner anfallender Wärmemengen geeignet, da der Wärmeaustauschgrad nicht groß genug ist. Wegen der Doppelwandigkeit der Kühlrohre ist der konstruktive Aufwand erheblich, denn die Innenrohre müssen am Außenrohr gehalten werden.

Zum anderen ist es bekannt (GB-A 144 614), den Temperaturverlauf chemischer Reaktionen dadurch zu kontrollieren, daß an einem Sammelrohr senkrechte Rohre angeordnet sind, welche teilweise mit Quecksilber gefüllt sind. Dieses verdampft bei der Wärmeentwicklung der chemischen Reaktion und die Dämpfe schlagen sich im oberen, gekühlten Teil der Rohre wieder nieder. Der Kühlkreislauf findet also innerhalb der Rohre statt. Die Dämpfe dürfen nicht einmal bis in das querverlaufende Sammelrohr gelangen, denn dann besteht die Gefahr, daß die Kühlrohre ungleichmäßig gefüllt sind und die wenig gefüllten Rohre durchbrennen. Um entsprechende Wärmemengen abführen zu können, müssen die Rohre sehr lang sein, was wiederum deren Stabilität beeinträchtigt.

Es besteht die Aufgabe, ein Kühlverfahren und einen Reaktor zu finden, womit ein größer Wärmeübergang erzielbar ist und der konstruktive Aufbau des Kühlsystems einfacher ist.

Gelöst wird diese Aufgabe durch die Kombination folgender Merkmale:

a) der Dampf kontaktiert in den Siederohren die Kühlflüssigkeit direkt im Gegenstrom,
b) die Öffnungen der Siederohre werden laufend von Kühlflüssigkeit überflutet und
c) der aus den Siederohren austretende Dampf wird laufend durch die überflutende Kühlflüssigkeit hindurch abgeführt.

Dadurch wird erreicht, daß große Wärmemengen pro Zeiteinheit abgeführt werden können, wobei sichergestellt ist, daß alle Siederohre stets ausreichend mit Kühlflüssigkeit beaufschlagt sind. Das Temperaturgefälle in der Wandung der Siederohre kann sehr gering gehalten werden, und zwar etwa um 10°C. Durch den dadurch erzielten, überall gleichmäßigen Wärmeübergang ist eine lange Lebensdauer der Siederohre gewährleistet. Daß der Dampf durch die über den Öffnungen der Siederohre lagernde Kühlflüssigkeitsschicht hindurchtreten muß, hat sich überraschenderweise nicht als nachteilig erwiesen. Selbstverständlich kann die Kühlflüssigkeit auch unter Unterdruck bzw. unter Druck gesetzt werden.

Vorzugsweise wird die dem Dampf innewohnende Wärmemenge rückgewonnen. Eine solche Nutzung der Energie des Dampfes macht das Verfahren besonders wirtschaftlich.

Dabei ist es vorteilhaft, das bei der Wärmerückgewinnung entstehende Kondensat als Kühlflüssigkeit den Siederohren wieder zuzuführen.

Sowohl die Wärmerückgewinnung als auch ein solcher Kühlkreislauf sind an sich bekannt und dienen der Wirtschaftlichkeit.

Verwendet man, wie meist üblich, Wasser als Kühlflüssigkeit, so ist es vorteilhaft, wenn die Geschwindigkeit des Dampfes beim Austritt aus den Siederohren 0,2 bis 15 m/s beträgt, vorzugsweise 0,2 bis 8 m/s.

Bewegt man sich im Rahmen dieser Dampfgeschwindigkeiten, so ist ein störungsfreier Verfahrensablauf hinsichtlich der Kühlung zu erwarten. Es lassen sich aber beispielsweise auch organische Lösungsmittel mit Siedetemperaturen bei Normaldruck von 40 bis 250°C verwenden. Das Volumen des Reaktionsraumes ist ebenso wenig von Bedeutung wie der Druck des erzeugten Dampfes. Das Volumen des Reaktionsraumes liegt normalerweise zwischen 2 und 100 m³, und es entsteht ein Dampf von 0 bis 30 bar Überdruck.

Der neue Reaktor, insbesondere Rührreaktor, zur Durchführung exothermer Reaktionen geht aus von einem geschlossenen Behälter, wobei der Behälter einen Zwischenboden aufweist, in welchem nach unten ragende, an ihrem unteren Ende verschlossene Siederohre befestigt sind, und wobei sich unterhalb des Zwischenbodens der mit Zulauf und Ablauf versehene Reaktionsraum befindet und oberhalb des Zwischenbodens ein Kondensatsammelraum angeordnet ist.

Das Neue ist darin zu sehen, daß

a) die Siederohre eine einfache Wandung aufweisen,
b) der Kondensatsammelraum gleichzeitig als Kühlflüssigkeitsverteilerraum ausgebildet ist, in welchen
c) eine Kühlflüssigkeitszulaufleitung mündet und von welchem
d) eine Dampfleitung abführt, und
e) dem Kühlflüssigkeitsverteilerraum ein auf ein in der Zulaufleitung angeordnetes Ventil einwirkender Füllstandsregler zugeordnet ist.

Die einfache Wandung der Siederohre macht den Aufbau des Kühlteiles des Reaktors weniger aufwendig und erhöht den Kühleffekt. Die Gestaltung des Kondensatsammelraumes als Kühlflüssigkeitsverteilerraum hat den Vorteil, daß vom Dampf mitgeführte Flüssigkeitströpfchen den Siederohren wieder unmittelbar zugeführt werden. Die laufende Zuführung von Kühlflüssigkeit durch eine Kühlflüssigkeitszulaufleitung und Abführung des Dampfes durch eine Dampfabführleitung ermöglichen es, mittels des Füllstandsreglers das Ventil in der Zulaufleitung so zu betätigen, daß über den Siederohren ständig eine ausreichend hohe Schicht von Kühlflüssigkeit vorhanden ist.

Vorzugsweise beträgt das Verhältnis der Kühlfläche der Siederohre zum Volumen des Reaktionsraumes 40 bis 400 m² pro m³.

In diesem Verhältnisbereich ist ein hoher Wärmeübergang ohne Schädigung der Siederohre gewährleistet.

Der Kühlflüssigkeitsverteilerraum ist vorzugsweise ringförmig gestaltet und in der Mittelachse des Behälters ist ein Rührwerk angeordnet.

Durch die zentrale Anordnung des Rührwerkes und die ringförmig darum angeordneten Siederohre werden gute Strömungsverhältnisse im Reaktionsraum erzielt, wodurch der Wärmeübergang bzw. die Wärmeabfuhr begünstigt wird.

Gemäß einer besonders vorteilhaften Ausführungsform ist der Behälter mit einem Deckel versehen, welcher in einen konzentrischen Deckel und einen zentrischen Deckel unterteilt ist, von denen der äußere Deckel den ringförmigen Kühlflüssigkeitsverteilerraum abdeckt und am inneren Deckel das Rührwerk gelagert ist.

Die Art der exothermen chemischen Reaktion im Reaktionsraum ist nicht von Bedeutung. Der neue Reaktor ist insbesondere bei der Hydrierung aromatischer Amine mit einem suspendierten, festen Hydrierungskatalysator geeignet. Es können Behälter eingesetzt werden, welche 200 bis 10.000 Siederohre aufweisen.

Der Rührreaktor besteht aus einem Behälter 1, welcher unterteilt ist in ein Behälterunterteil 2 und ein Aufsatzstück 3. Am Behälterunterteil 2 ist ein von unten einmündender Zuführstutzen 4 für den zur Reaktion zu bringenden Stoff angeordnet. Der Reaktionsraum, welcher ein Volumen von 11,2 m³ besitzt, ist mit 5 bezeichnet. Etwa in 2/3 Höhe des Reaktionsraumes 5 ist ein Ablaufstutzen 6 für das Reaktionsprodukt angeordnet. Der obere Rand des Behälterunterteils 2 ist mit einem Flansch 7 versehen, welcher mit einem unteren Flansch 8 des Aufsatzstückes 3 verschraubt ist. In diesem Aufsatzstück 3 ist ein ringförmiger Zwischenboden 9 eingeschweißt.

In diesem Zwischenboden 9 sind 2.600 Siederohre 10 eingeschweißt, welche in den Reaktionsraum 5 hineinragen und lediglich eine einfache Wandung besitzen. Sie haben einen Außendurchmesser von 25 mm bei einer Wandstärke von 3 mm. An den unteren geschlossenen Enden sind sie durch Verbindungslaschen 11 in ihrer Position stabilisiert. Vom inneren Rand des Zwischenbodens 9 ragt eine Wandung 12 senkrecht nach oben und endet in einem Ringflansch 13. An diesem Ringflansch 13 sind die konzentrischen Deckel 14, 15 angeschraubt, wobei der äußere Deckel 14 auch an einem Flansch 16 des Aufsatzstückes 3 befestigt ist.

Auf diese Weise schließen der Zwischenboden 9, die Wandung 12 sowie der Deckel 14 zusammen mit der Wandung 17 des Aufsatzstückes 3 einen ringförmigen Verteiler- und Kondensatabscheideraum 18 ein. Dieser Verteiler- und Kondensatabscheideraum 18 ist mit einem Zulauf 19 für das Kühlmittel sowie mit einem Abzug 20 für den erzeugten Dampf versehen. Außerdem ist ein Füllstandsregler 21 vorgesehen, welcher auf ein Absperrorgan 22 in der angedeuteten Zulaufleitung 23 einwirkt. Am Deckel 15 ist zentrisch ein Rührwerk 24 gelagert. Im Reaktionsraum 5 werden 3,569 kg/h eines Stoffes mit 240 kg/h Wasserstoff bei Anwesenheit eines Hydrierungskatalysators umgesetzt. In den Verteiler- und Abscheideraum 18 werden 8.000 kg/h Wasser mit einer Temperatur von 80°C eingespeist, das bei 8 bar Absolutdruck verdampft. Die Temperatur des Produkts im Reaktor beträgt 182°C. Das Niveau im Reaktionsraum 18 wird zwischen 100 und 600 mm unterhalb des Zwischenbodens 9 eingestellt.

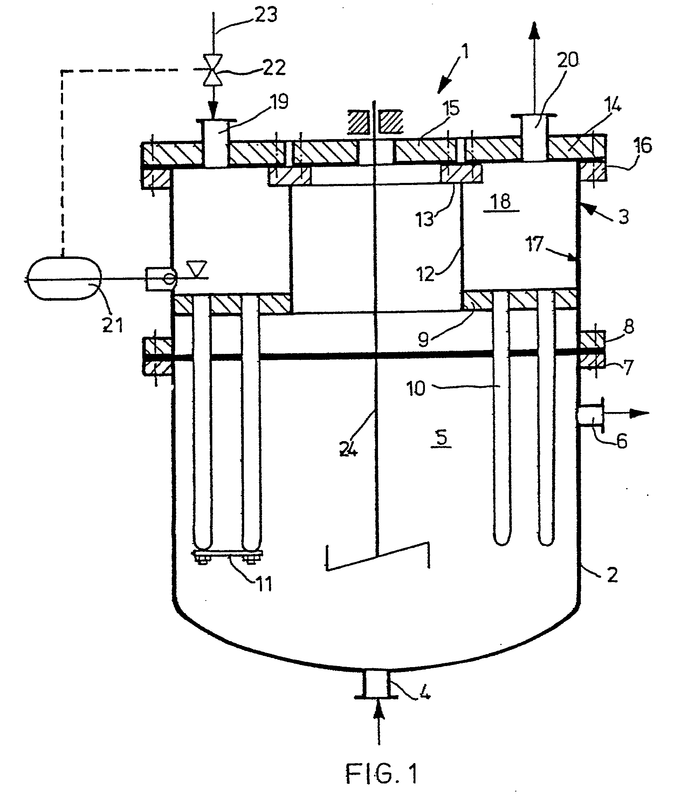

**Patentansprüche**

1. Verfahren zur Kühlung beim Ablauf exothermer Reaktionen, insbesondere in einem Rührreaktor, wobei Kühlflüssigkeit senkrechten, unten geschlossenen Siederohren (10) laufend von oben zugeführt und der entstehende Dampf im Gegenstrom zur Kühlflüssigkeit nach oben abgeführt wird, gekennzeichnet durch die Kombination folgender Merkmale:

a) der Dampf kontaktiert in den Siederohren (10) die Kühlflüssigkeit direkt im Gegenstrom,

b) die Öffnungen der Siederohre (10) werden laufend von Kühlflüssigkeit überflutet und

c) der aus den Siederohren (10) austretende Dampf wird laufend durch die überflutende Kühlflüssigkeit hindurch abgeführt.

2. Verfahren nach Anspruch 1, dadurch gekennzeichnet, daß die dem Dampf innewohnende Wärmeenergie rückgewonnen wird.

3. Verfahren nach Anspruch 2, dadurch gekennzeichnet, daß das bei der Wärmerückgewinnung entstehende Kondensat als Kühlflüssigkeit den Siederohren (10) wieder zugeführt wird.

4. Verfahren nach einem der Ansprüche 1 bis 3, dadurch gekennzeichnet, daß die Geschwindigkeit des Dampfes im Falle von Wasser als Kühlflüssigkeit beim Austritt aus den Siederohren 0,2 bis 15 m/s, vorzugsweise 0,2 bis 8 m/s, beträgt.

5. Reaktor, insbesondere Rührreaktor, zur Durchführung exothermer Reaktionen, bestehend aus einem geschlossenen Behälter (1), wobei der Behälter (1) einen Zwischenboden (9) aufweist, in welchem nach unten ragende, an ihrem unteren Ende verschlossene Siederohre (10) befestigt sind, und wobei sich unterhalb des Zwischenbodens (9) der mit Zulauf (4) und Ablauf (6) versehene Reaktionsraum (5) befindet und oberhalb des Zwischenbodens (9) ein Kondensatsammelraum (18) angeordnet ist, dadurch gekennzeichnet, daß

a) die Siederohre (10) eine einfache Wandung aufweisen,

b) der Kondensatsammelraum (18) gleichzeitig als Kühlflüssigkeitsverteilerraum (18) ausgebildet ist, in welchen

c) eine Kühlflüssigkeitszulaufleitung (23) mündet und von welchem

d) eine Dampfleitung (20) abführt, und

e) dem Flüssigkeitsverteilerraum (18) ein auf ein in der Zulaufleitung (23) angeordnetes Ventil (22) einwirkender Füllstandsregler (21) zugeordnet ist.

6. Reaktor nach Anspruch 5, dadurch gekennzeichnet, daß das Verhältnis der Kühlfläche der Siederohre (10) zum Volumen des Reaktionsraumes (5) 40 bis 400 m²/m³ beträgt.

7. Reaktor nach Anspruch 5 oder 6, dadurch gekennzeichnet, daß der Kühlflüssigkeitsverteilerraum (18) ringförmig gestaltet ist und in der Mittelachse des Behälters (1) ein Rührwerk (24) angeordnet ist.

8. Reaktor nach einem der Ansprüche 5 bis 7, dadurch gekennzeichnet, daß der Behälter (1) mit einem Deckel (14, 15) versehen ist, welcher in einen konzentrischen Deckel (14) und einen zentrischen Deckel (15) unterteilt ist, von denen der äußere Deckel (14) den ringförmigen Flüssigkeitsverteilerraum (18) abdeckt und am inneren Deckel (15) das Rührwerk (24) gelagert ist.

## Claims

1. A cooling process for exothermic reactions, more particularly in a stirred reactor, cooling liquid being fed continuously from above to vertical boiling tubes (10) and the vapour formed being removed upwards in countercurrent to the cooling liquid, characterized by the following features in combination:

a) the vapour directly contacts the cooling liquid in countercurrent in the boiling tubes (10),

b) the orifices of the boiling tubes (10) are continuously flooded over by cooling liquid and

c) the vapour issuing from the boiling tubes (10) is continuously removed through the flooding cooling liquid.

2. A process as claimed in claim 1, characterized in that the heat in the vapour is recovered.

3. A process as claimed in claim 2, characterized in that the condensate formed during recovery of the heat is returned to the boiling tubes (10) as cooling liquid.

4. A process as claimed in any of claims 1 to 3, characterized in that, where the cooling liquid is water, the vapour issues from the boiling tubes at a rate of 0.2 to 15 m/s and preferably at a rate of 0.2 to 8 m/s.

5. A reactor, more especially a stirred reactor, for carrying out exothermic reactions consisting of a closed vessel (1), the vessel (1) having an intermediate plate (9) in which downwardly projecting boiling tubes (10) closed at their lower ends are fixed and the reaction chamber (5) provided with an inlet (4) and an outlet (6) being situated beneath the intermediate plate (9) and a condensate collecting chamber (18) being arranged above the intermediate plate (9), characterized in that

a) the boiling tubes (10) have a single wall,

b) the condensate collecting chamber (18) is designed simultaneously as a liquid distributing chamber (18) into which

c) a cooling liquid feed pipe (23) opens and from which

d) a vapour pipe (20) leads off and

e) a level governor (21) acting on a valve (22) arranged in the feed pipe (23) is associated with the liquid distributing chamber (18).

6. A reactor as claimed in claim 5, characterized in that the ratio of the cooling area of the boiling tubes (10) to the volume of the reaction chamber (5) is 40 to 400 m²/m³.

7. A reactor as claimed in claims 5 or 6, characterized in that the liquid distributing chamber (18) is annular in shape and a stirrer (24) is arranged in the central axis of the vessel (1).

8. A reactor as claimed in any of claims 5 to 7, characterized in that the vessel (1) is provided with a cover (14, 15) which is divided into a concentric cover (14) and a central cover (15), of which the outer cover (14) covers the annular liquid distributing chamber (18) while the stirrer (24) is mounted on the inner cover (15).

## Revendications

1. Procédé pour le refroidissement lors du déroulement de réactions exothermiques, en particulier dans un réacteur à agitateur, dans lequel un liquide de refroidissement est amené de façon continue par le haut dans des tubes bouilleurs (10) verticaux fermés au bas et la vapeur produite est évacuée vers le haut à contre-courant par rapport au liquide de refroidissement, caractérisé par la combinaison des caractéristiques suivantes:

a) la vapeur est directement en contact à contre-courant dans les tubes bouilleurs (10) avec le liquide de refroidissement,

b) les orifices des tubes bouilleurs (10) sont constamment débordés par le liquide de refroidissement, et

c) la vapeur sortant des tubes bouilleurs (10) est constamment évacuée par le liquide de refroidissement débordant.

2. Procédé selon la revendication 1, caractérisé en ce que l'énergie calorifique présente dans la vapeur est récupérée.

3. Procédé selon la revendication 2, caractérisé en ce que le condensat produit lors de la récupération de chaleur est ramené comme liquide de refroidissement aux tubes bouilleurs (10).

4. Procédé selon l'une des revendications 1 à 3, caractérisé en ce que la vitesse de la vapeur à la sortie des tubes bouilleurs dans le cas où l'eau sert de liquide de refroidissement est de 0,2 à 15, de préférence de 0,2 à 8 m/s.

5. Réacteur, en particulier réacteur à agitateur, pour l'exécution de réactions exothermiques, composé d'un récipient fermé (1), le récipient (1) comportant un fond intermédiaire (9) dans lequel sont fixés des tubes bouilleurs (10) dépassant vers le bas et fermés à leur extrémité inférieure, et dans lequel se trouve en-dessous du fond intermédiaire (9) un espace de réaction (5) pourvu d'une amenée (4) et d'une évacuation (6) et un espace collecteur de condensat (18) est prévu au-dessus du fond intermédiaire (9), caractérisé en ce que:

a) les tubes bouilleurs (10) présentent une paroi simple,

b) l'espace collecteur de condensat (18) est en même temps prévu comme espace de distribution (18) de liquide de refroidissement, dans lequel
c) une conduite (23) d'amenée de liquide de refroidissement aboutit, et duquel
d) une conduite de vapeur (20) sort, et
e) un régulateur de niveau de remplissage (21) agissant sur une vanne (22) prévue sur la conduite d'amenée (23) est affecté à l'espace (18) de distribution de liquide de refroidissement.

6. Réacteur selon la revendication 5, caractérisé en ce que le rapport entre la surface de refroidissement des tubes bouilleurs (10) et le volume de l'espace de réaction (5) est de 40 à 400 m²/m³.

7. Réacteur selon la revendication 5 ou 6, caractérisé en ce que l'espace (18) de distribution de liquide de refroidissement est de forme annulaire et qu'un agitateur (24) est monté dans l'axe central du récipient (1).

8. Réacteur selon l'une des revendications 5 à 7, caractérisé en ce que le récipient (1) est pourvu d'un couvercle (14, 15), divisé en un couvercle concentrique (14) et un couvercle central (15), le couvercle extérieur (14) couvrant l'espace (18) annulaire de distribution de liquide de refroidissement et l'agitateur (24) étant monté sur le couvercle intérieur (15).

FIG. 1